# EUROPEAN PATENT SPECIFICATION

(11) **EP 0 624 318 B1**
(45) Date of publication and mention of the grant of the patent: **17.12.1997**
(21) Application number: 94610026.0
(22) Date of filing: 11.05.1994
(51) Int. Cl.: A23G 3/00

(54) **A process for making sugarfree maltitol sweets**
Verfahren zur Herstellung zuckerfreier Maltit-Süssigkeiten
Procédé de préparation de friandises de maltitol exempt de sucre

(30) Priority: 13.05.1993 DK 56293
(43) Date of publication of application: 17.11.1994
(73) Proprietor: SOEMODS BOLCHER, FRA DEN GAMLE FABRIK ApS, 1165 Copenhagen K (DK)
(72) Inventor: Soemod, Michael Martin, DK-2860 Soborg (DK)
(74) Representative: Nyeng, Joergen

(56) References cited:
- EP-A- 0 370 761
- EP-A- 0 533 334
- DE-A- 4 019 916

## Description

This invention concerns a process for making sugarfree sweets or pastilles which consist of at least 50% by weight of maltitol, the balance being other sugar alcohols, flavourings, optionally colour and optionally a little water.

In the sugar confectionary industry the term "boiled sugar" is used for the well-known hard sugar sweets which have a glass-like appearance and a crisp consistency. Such boiled sugar sweets traditionally consist of a mixture of saccharose and glucose syrup, which has been dehydrated by boiling. The traditional manufacture of sugar sweets in the sweet boiling industry consists in boiling at 173-180 °C and atmospheric pressure, following which the heated dewatered sugar mass is allowed to cool until it assumes a plastic consistency, and it is then kneaded together with optional colour and flavourings on a suitable substrate (best an iron table coated by a hide). If desired, air is then introduced into the mass by repeated pulling from a hook to provide a silky gloss, and finally sausages of the mass are cut into sweets which are cooled to room temperature by means of blowers. The sweets obtain a very fine, hard and crisp consistency, but they yellow and become dark and slightly bitter if the heating is not sufficiently rapid, i.e. the heating period is too long. Modern industrial manufacture of sugar sweets takes place by de-watering of the sugar syrup in vacuum at a lower temperature, following which flavourings and optionally colour are added and, if desired, air is introduced into the mass, which in a so-called lump roll is then heated again and pulled out into a string which is moulded into sweets by machine rolling or cutting. However, this does not impart the same fine consistency and taste to the sweets as boiling.

For the manufacture of sugarfree sweets of boiled sugar type it is usual to replace the mixture of saccharose and glucose syrup with sorbitol syrups, optionally containing mannitol, or by hydrogenated starch hydrolysates. However, these mixtures have certain drawbacks; the sorbitol syrups because they are too liquid and therefore have to be hot-poured into sweet moulds, and also crystallisation phenomena may occur owing to the high content of sorbitol; the hydrogenated starch hydrolysates because they are less sweet and moreover have a not insignificant cariogenic nature. Furthermore, sorbitol is converted into glucose during digestion and is therefore not suitable for diabetics.

Since the sweetening effect and nature of the disaccharide alcohol maltitol resembles sucrose very much, and maltitol is hardly absorbed and utilized by the digestive organs and cannot be fermented by the microorganisms in the mouth, it has been attempted to make sugarfree sweets of maltitol syrup.

It is stated in SE published application 452 623 that "e.g. amorphous, substantially anhydrous toffees can be obtained by boiling a water-containing maltitol solution at 180-190 °C, but the toffees must be stored in a moisture-tight container together with a drying agent owing to their high hygroscopicity and deliquescence, which causes great difficulty in the handling of the toffees".

In a guide on the use of maltitol for the making of sweets the supplier of a plurality of maltitol syrups, Cerestar A/S, gives the following recipe:

### "CONDITIONS OF PRODUCTION

. Boil the sweet mass at about 168 °C and apply vacuum for 5-8 minutes to obtain a moisture content below 1.0%, preferably 0.5-0.8%.
   For "Maltidex®080", the manufacturing temperature may be reduced to about 155 °C.
. Moulding or plastic shaping. For the latter, cooling of the sweet mass is necessary (or 25 minutes) to obtain a shaping temperature of about 70 °C.
. Wrap the sugar pieces as soon as possible after shaping.
. Be sure of good protection by precise wrapping and/or packaging."

Thus, it is necessary to wrap the maltitol sweets individually to ensure that they do not absorb water, deliquesce and stick together. Furthermore, the maltitol sweets manufactured till now have a tough toffee-like consistency.

Document EP-A-0 533334 discloses a process for the production of hard candy comprising maltitol.

It has now surprisingly been found according to the invention that if a concentrated aqueous maltitol solution is heated at atmospheric pressure (so-called boiling) to a temperature of 190-250 °C and is then cooled and worked into sweets in a traditional manner, then the maltitol sweets become non-hygroscopic, they do not stick together, and they get an improved hard and crisp consistency, which brings out the flavour better. Furthermore, they do not yellow, even when stored for an extended period of time.

Accordingly, the process of the invention is characterized by heating a concentrated aqueous solution of maltitol comprising at least 50% by weight of solid maltitol, the balance being other sugar alcohols, at atmospheric pressure to a temperature in the range 190-250 °C, and preferably 200-210 °C, and then working the resulting mass into sweets in the usual manner.

The further working into sweets generally comprises allowing the heated dewatered maltitol mass to cool until it assumes a plastic consistency and then kneading it together with optional colour and flavourings, and, if desired, introducing air into the mass and pulling the mass into a string which is shaped to sweets.

The process of the invention is extremely suitable in connection with the traditional manufacture of sweets of the boiled sugar type, but it also gives good results in connection with industrial sweet manufacture by reheating and pressing in a lump roll and subsequent shaping to sweets by machine rolling or cutting.

The maltitol syrups which are used as starting materials in the process of the invention, are commercial products, e.g. "Maltidex®080" having 70-71% solids, of which min. 82% is maltitol and max. 5% is sorbitol, and "Maltidex®100" including 74-75% solids, of which 74-77% is maltitol and max. 2.5% is sorbitol, which are available from Cerestar Scandinavia A/S, Holte, Denmark.

Owing to their sweet taste and their hard and crisp consistency like normal sugar sweets, and because they are hardly absorbed and digested in the organism, the maltitol sweets made by the process of the invention are particularly suitable for diabetics.

The process of the invention is illustrated more fully by the following example.

### EXAMPLE

25 kg of "Maltidex®080" are heated in an open pot to about 200 °C and are cooled immediately afterwards by 10-20 °C on a cold table (a steel table cooled by water at about 14 °C and air blower). While the mass is positioned on the table, colour is added if desired, and then the mass is collected and placed on an iron table covered by a hide. It is allowed to cool here until it assumes a plastic consistency, following which it is flattened, flavourings are added and the mass is kneaded together. Immediately afterwards air is introduced into the mass by repeated pulling of it from a hook to provide a silky gloss. Finally, the sausages are cut to sweets, and they are cooled to room temperature by means of blowers.

The maltitol sweets thus produced have the same hard and crisp consistency as usual sugar sweets, which brings out the flavour. They do not stick together, and can be stored and sold as ordinary sugar sweets.

## Claims

1. A process for making sugarfree sweets or pastilles which consists of at least 50% by weight of maltitol, the balance being other sugar alcohols, flavourings, optionally colour and optionally a little water, **characterized** by heating a concentrated aqueous solution of maltitol including at least 50% by weight of solid maltitol, the balance being other sugar alcohols, at atmospheric pressure to a temperature in the range 190-250 °C, and preferably 200-210 °C, following which the resulting mass is worked into sweets in the usual manner.

2. A process according to claim 1, **characterized** by allowing the heated dewatered maltitol mass to cool until it assumes a plastic consistency, and then kneading it together with optional colour and flavourings, following which, if desired, air is introduced into the mass, and the mass is pulled into a string which is shaped into sweets.

3. A process according to claim 1 or 2, **characterized** by using as the starting material a commercial maltitol syrup selected among "Maltidex®080" and "Maltidex®100", available from Cerestar Scandinavia A/S, Skovlytoften 33, DK-2840 Holte, Denmark.

## Patentansprüche

1. Verfahren zur Herstellung zuckerfreier Süßwaren oder Pastillen, die aus mindestens 50 Gew.-% Maltit bestehen, wobei der Rest weitere Zuckeralkohole, Geschmacksstoffe, gegebenenfalls Farbstoff und gegebenenfalls etwas Wasser sind, gekennzeichnet durch das Erhitzen einer konzentrierten wäßrigen Lösung aus Maltit, die mindestens 50 Gew.-% festes Maltit umfaßt, wobei der Rest weitere Zuckeralkohole sind, bei atmosphärischem Druck auf eine Temperatur in dem Bereich von 190 bis 250°C und vorzugsweise 200 bis 210°C, worauf folgend die sich ergebende Masse in der gewöhnlichen Weise zu Süßwaren verarbeitet wird.

2. Verfahren nach Anspruch 1, dadurch gekennzeichnet, daß man die erhitzte, entwässerte Maltitmasse abkühlen läßt, bis sie eine verformbare Konsistenz annimmt, und sie dann zusammen mit gegebenenfalls Farbstoff und Geschmacksstoffen knetet, worauf folgend, wenn erwünscht, Luft in die Masse eingeleitet wird und die Masse zu einer Schnur gezogen wird, die zu Süßwaren geformt wird.

3. Verfahren nach einem der Ansprüche 1 oder 2, gekennzeichnet durch die Verwendung eines kommerziellen Maltitsirups, der unter "Maltidex®080" und "Maltidex®100", von Cerestar Scandinavia A/S, Skovlytoften 33, DK-2840 Holte, Dänemark, erhältlich, ausgewählt ist, als Ausgangsmaterial.

## Revendications

1. Procédé de préparation de confiseries ou pâtes de fruits sans sucre, consistant en au moins 50 % en poids de maltitol, le reste étant d'autres alcools de sucre, des aromatisants, éventuellement des colorants et éventuellement un peu d'eau, caractérisé en ce que l'on chauffe une solution aqueuse concentrée de maltitol contenant au moins 50 % en poids de maltitol solide, le reste étant des alcools de sucre, à la pression atmosphérique, a une température dans l'intervalle de 190-250°C, et de préférence 200-210°C, après quoi la masse résultante est transformée en confiseries de manière usuelle.

2. Procédé selon la revendication 1, caractérisé en ce que l'on laisse la masse chauffée et déshumidifiée de maltitol refroidir jusqu'à ce qu'elle prenne une consistance plastique, puis on la malaxe avec un éventuel colorant et des aromatisants, après quoi, si nécessaire, de l'air est introduit dans la masse, et la masse est effilée et mise sous forme de confiseries.

3. Procédé selon la revendication 1 ou 2, caractérisé en ce que l'on utilise en tant que matériau de départ, un sirop de maltitol commercial choisi parmi "Maltidex®80" et "Maltidex®100", disponible chez Cerestar Scandinavia A/S, Skovlytoften 33, DK-2840 Holte, Danemark.
